# EUROPEAN PATENT APPLICATION

(11) **EP 4 810 988 A1**
(43) Date of publication of application: **23.09.2026**
(21) Application number: 23961795.4
(22) Date of filing: 19.12.2023
(51) Int. Cl.: G01S 7/481, G01S 17/02

(54) **DETECTION DEVICE, LASER RADAR, AND TERMINAL**

(71) Applicant: Yinwang Intelligent Technologies Co., Ltd., Shenzhen, Guangdong 518110 (CN)
(72) Inventor: LIU, Jun, Shenzhen, Guangdong 518129 (CN); HUA, Kangjian, Shenzhen, Guangdong 518129 (CN); XU, Yifan, Shenzhen, Guangdong 518129 (CN)
(74) Representative: MERH-IP Matias Erny Reichl Hoffmann Patentanwälte PartG mbB
(86) International application number: PCT/CN2023/139887
(87) International publication number: WO 2025/129450

(57) **Abstract**

A detection apparatus, a lidar, and a terminal are provided, and are applied to the field of detection technologies. A detection apparatus (10) includes an emitting module (1), a receiving module (2), and an isolation buffer member (31). The emitting module (1) is configured to emit detection light, where the detection light is propagated to the outside of the detection apparatus (10) through an optical element (4). The receiving module (2) is configured to receive return light from the outside of the detection apparatus (10), where the return light passes through the optical element (4). The isolation buffer member (31) is disposed inside the detection apparatus (10), and is disposed between a main optical path of the detection light and a main optical path of the return light. The isolation buffer member (31) is made of a flexible material, and a gap between the isolation buffer member (31) and the optical element (4) is less than a first distance. The isolation buffer member (31) is disposed close to the optical element (4) through which both emitting and receiving pass, to isolate an emitting optical path from a receiving optical path. This can significantly reduce a possibility that stray light enters the receiving optical path, and improve effectiveness of an optical signal received by the detection apparatus (10). In addition, the isolation buffer member (31) is made of a flexible material, so that reliability of the detection apparatus (10) can be improved.

## Description

### TECHNICAL FIELD

This application relates to the field of detection technologies, and in particular, to a detection apparatus, a lidar, and a terminal.

### BACKGROUND

A lidar (Lidar) is a sensor that combines a laser technology and a photoelectric conversion technology. A basic working principle of the lidar is as follows: An emitter emits detection light to a detection region; and a receiver receives return light (or referred to as an echo) returned from the detection region, and obtains related information of a target in the detection region through the return light. The related information of the target in the detection region helps implement quick recognition of a surrounding object and decision-making, and therefore is widely applied to many fields such as intelligent vehicles, smart transportation, and surveying and mapping.

With development of information technologies, the receiver of the lidar is increasingly sensitive, so that both a remote detection capability and detection precision of a detection apparatus are improved. However, negative effect brought by stray light is increasingly serious. Because an actual reflectivity or an actual transmittance of an optical element disposed on an emitting optical path and a receiving optical path of the lidar is usually not ideal, for example, cannot reach 100%, stray light is inevitably generated when detection light emitted from a light source passes through the optical element, and the stray light may be received by the receiver of the detection apparatus. Consequently, detection performance of the lidar is affected.

How to reduce impact of the stray light on the return light and improve the detection performance of the detection apparatus is a hot issue that is being studied by a person skilled in the art.

### SUMMARY

Embodiments of this application provide a detection apparatus, a lidar, and a terminal, to reduce impact of stray light inside the detection apparatus on return light and improve detection performance of the detection apparatus while ensuring reliability of the detection apparatus.

According to a first aspect, an embodiment of this application provides a detection apparatus, including an emitting module, a receiving module, and an isolation buffer member. The emitting module is configured to emit detection light, where the detection light is propagated to the outside of the detection apparatus through an optical element. The receiving module is configured to receive return light from the outside of the detection apparatus, where the return light passes through the optical element. The isolation buffer member is disposed inside the detection apparatus, and is disposed between a main optical path of the detection light and a main optical path of the return light. A gap between the isolation buffer member and the optical element is less than a first distance. Further, the isolation buffer member is made of a flexible material.

In this application, both the detection light and the return light pass through the optical element. When the detection light passes through the optical element, stray light is highly likely to be generated, and after being refracted, reflected, diffracted, or the like, the stray light may reach a receiver along an optical path of the return light, interfering in receiving of the return light. However, in this application, the isolation buffer member is disposed inside the detection apparatus to isolate an emitting optical path from a receiving optical path, so that a possibility that the stray light enters the receiving optical path can be significantly reduced, effectiveness of an optical signal received by the detection apparatus can be improved, and detection accuracy can be improved. Further, the buffer member is designed to be close to the optical element, and a gap between the buffer member and the optical element is small. This greatly improves isolation between the emitting optical path and the receiving optical path, and further reduces a possibility that the stray light escapes to the receiving optical path.

Further, the optical element is usually a precision element. In this application, the isolation buffer member is made of the flexible material, so that a possibility that the isolation buffer member scratches or breaks a component in the detection apparatus can be reduced, and reliability of the detection apparatus can be improved. In a possible case, when the detection apparatus is impacted by an external force, the impact force reaches the isolation buffer member. In this case, the flexible material has specific toughness, and is not easy to break to generate a sharp object. In addition, the isolation buffer member made of the flexible material can play a buffer role, so that a possibility of breaking the optical element in the detection apparatus can be reduced. Therefore, the isolation buffer member made of the flexible material can be used for anti-collision, thereby improving reliability of the detection apparatus. In addition, the flexible material further has advantages such as low costs, simple manufacturing, and a light weight. This helps lighten the detection apparatus and reduce costs of the detection apparatus.

In conclusion, in this application, impact of spurious emission inside the detection apparatus on the return light can be significantly reduced, detection accuracy of the detection apparatus can be improved, and detection performance can be improved.

In some solutions, time of flight corresponding to internal stray light is short, and when the stray light is received by the receiver, a capability of the detection apparatus for detecting a nearby target is severely affected. Therefore, isolating the emitting optical path from the receiving optical path can reduce impact of the internal stray light on return light of the nearby target, and enhance a near-side detection capability of the detection apparatus.

In some cases, because the emitting optical path is isolated from the receiving optical path, reflectivity requirements on the optical element and a non-optical element in the detection apparatus may also be correspondingly reduced, thereby greatly reducing overall costs of the detection apparatus.

In a possible implementation of the first aspect, the emitting module and the receiving module are off-axis architectures. In a coaxial architecture, because some optical elements need to be shared for receiving and emitting, it is difficult to isolate an emitting optical path from a receiving optical path. However, in the off-axis architecture, an emitting optical path and a receiving optical path are disposed separately, and are easy to be isolated. Therefore, when this solution is applied to the off-axis architecture, the emitting optical path can be well isolated from the receiving optical path, and detection performance of the detection apparatus can be improved.

Certainly, for some detection apparatuses using the coaxial architecture, an emitting optical path is separated from a receiving optical path in some regions. In this case, an isolation buffer member 31 may be disposed at a position at which the emitting optical path is separated from the receiving optical path, to improve isolation.

In still another possible implementation of the first aspect, the isolation buffer member is in contact with and connected to the optical element. Because the detection light is reflected on a surface of the optical element, stray light is formed. In the foregoing implementation, the isolation buffer member abuts against the optical element, so that the stray light generated on the surface of the optical element can be blocked at a position close to the optical element, thereby improving isolation between a receiving optical path and an emitting optical path, and improving detection performance of the detection apparatus.

In still another possible implementation of the first aspect, the first distance is a thickness of the isolation buffer member in a first direction, and the first direction is a direction from a main optical axis of the detection light to a main optical axis of the return light. In the foregoing implementation, the isolation buffer member is spaced from the optical element, but a distance between the isolation buffer member and the optical element does not exceed the thickness of the isolation buffer member. In this way, when the detection apparatus implements emitting and reception isolation, specific space is further reserved, to facilitate assembly. In some cases, a possibility that the optical element or the entire detection apparatus is loosely mounted due to compression of the isolation buffer member can be further reduced by setting the spacing, thereby improving reliability of the detection apparatus.

In still another possible implementation of the first aspect, the detection apparatus further includes a partition plate, and the partition plate is disposed between the main optical path of the detection light and the main optical path of the return light, and is disposed on a side that is of the isolation buffer member and that is away from the optical element. In the foregoing implementation, the partition plate has a support function and can stably maintain a structural form of the partition plate, and the isolation buffer member is disposed close to the optical element to avoid scratching and breaking the optical element. In this way, isolation is implemented, and reliability of the detection apparatus can be improved.

Optionally, a hardness of the isolation buffer member is less than a hardness of the partition plate. This can ensure that the partition plate stably maintains a structural form of the partition plate, and improve overall stability of the detection apparatus.

In still another possible implementation of the first aspect, in a thickness direction of the partition plate, the thickness of the isolation buffer member is greater than or equal to a thickness of the partition plate. In this implementation, the thickness of the partition plate may be designed to be small, to facilitate lightweight development of the detection apparatus.

In still another possible implementation of the first aspect, the partition plate and the isolation buffer member are configured to isolate an optical path of the emitting module from an optical path of the receiving module.

In still another possible implementation of the first aspect, the detection apparatus further includes a scanning module, the scanning module rotates along a movable shaft, the scanning module includes a first scanning region located on one side of the partition plate and a second scanning region located on the other side of the partition plate, the first scanning region and the emitting module are located on a same side of the partition plate, and the second scanning region and the receiving module are located on a same side of the partition plate.

Further, the first scanning region is configured to reflect the detection light from the emitting module to the optical element, and the second scanning region is configured to reflect the return light from the optical element to the receiving module.

In the foregoing implementation, an optical path of the scanning detection apparatus is isolated. Scanning of the detection light is also isolated from scanning of the received light through partition, to further improve isolation between the emitting optical path and the receiving optical path.

In still another possible implementation of the first aspect, an opening is disposed on the partition plate, the opening penetrates the partition plate in the thickness direction of the partition plate, and the scanning module passes through the opening. The opening is disposed on the partition plate to accommodate the scanning module, so that an emitting optical path is isolated from a receiving optical path around the scanning module, to prevent stray light caused by a tiny defect on a surface of the scanning module from affecting the return light. In addition, a layout of components is more compact. This facilitates miniaturization development of the detection apparatus.

In still another possible implementation of the first aspect, the scanning module further includes an isolation part, and the isolation part protrudes from a plurality of reflective surfaces that are of the scanning module and that are disposed around a rotation shaft, and encircles the rotation shaft. The isolation part can isolate an emitting optical path from a receiving optical path, to prevent stray light caused by a defect on the surface the scanning module from severely affecting the return light, and further improve isolation between an emitting optical path and a receiving optical path near the scanning module. In addition, disposing the isolation part can further reduce requirements on features such as smoothness and scattering of the scanning module, and reduce costs of the scanning module.

Further, the isolation part is located in the opening of the partition plate, and an outer peripheral edge that is of the isolation part and that faces away from the reflective surfaces is spaced from and opposite to an inner wall surface of the opening. A position of the isolation part is opposite to a position of the partition plate, so that isolation between an emitting optical path and a receiving optical path is further improved, and impact of spurious emission inside the detection apparatus on the return light is reduced.

In still another possible implementation of the first aspect, in a direction perpendicular to the thickness direction of the partition plate, a spacing between the isolation part and the inner wall surface of the opening is the first distance, the thickness of the partition plate is a second distance, and the first distance is less than the second distance. Because stray light may pass through the gap between the partition plate and the isolation part to reach an optical path on the other side, a size of the gap is limited in the foregoing implementation, so that isolation between the emitting optical path and the receiving optical path can be improved.

In still another possible implementation of the first aspect, a ratio of the second distance to the first distance is greater than or equal to 2. In this way, the spacing between the isolation part and the inner wall surface of the opening is disposed within half of the thickness of the partition plate, so that a possibility that stray light enters the receiving optical path can be significantly reduced, and isolation between the emitting optical path and the receiving optical path can be further improved.

In still another possible implementation of the first aspect, the flexible material includes one or more of foam, a Mylar film, silicon gel, or the like.

In still another possible implementation of the first aspect, a cross section of the isolation buffer member is a rectangle, or the isolation buffer member is a component formed by splicing a plurality of structures.

In still another possible implementation of the first aspect, when the flexible material includes the foam, a diameter of a foam hole of the foam is greater than or equal to 0.1 millimeters (mm). In this way, a diameter of the foam hole is large, so that suppression effect on stray light can be improved, and blade edge diffraction at the edge of the isolation buffer member can be avoided, thereby reducing a possibility of generating stray light.

In still another possible implementation of the first aspect, the isolation buffer member includes a first surface facing the optical element, and the optical element includes a second surface facing the isolation buffer member; and a length of the first surface in the first direction is a third distance, and the first direction is the direction from the main optical axis of the detection light to the main optical axis of the return light. A thickness of the optical element in a second direction is a fourth distance, the second direction is a direction perpendicular to the second surface, and the third distance is greater than the fourth distance.

When the thickness of the optical element is larger, after light is reflected on an outer surface of the optical element, the light can travel a larger distance. Therefore, the thickness of the isolation buffer member also needs to be designed to be large, to prevent stray light from crossing into the receiving optical path. Therefore, the thickness of the isolation buffer member is set to be greater than the thickness of the optical element, so that a possibility that stray light enters the receiving optical path can be significantly reduced, effectiveness of an optical signal received by the detection apparatus can be improved, and detection accuracy can be improved.

In still another possible implementation of the first aspect, a ratio of the third distance to the fourth distance falls within [1.4, 2], for example, is 1.5. In this implementation, the thickness of the isolation buffer member is set to be more than twice the thickness of the optical element, so that a possibility that stray light enters the receiving optical path can be further reduced.

In still another possible implementation of the first aspect, the length of the first surface in the first direction is positively correlated with a reflectivity of the optical element. It may be understood that a higher reflectivity of the optical element indicates more stray light generated on a surface, and the thickness of the isolation buffer member is correspondingly designed to be larger, so that stray light inside the detection apparatus can be reduced.

In still another possible implementation of the first aspect, the optical element includes a second surface and a third surface that are disposed opposite to each other, the second surface is close to the isolation buffer member, and the third surface is away from the isolation buffer member. A thickness design of the isolation buffer member may meet the following condition: The isolation buffer member can block stray light reflected at least once on the third surface. In other words, when a beam of stray light enters the optical element from the inside of the detection apparatus, and is reflected on the third surface of the optical element, the isolation buffer member can block the stray light formed by reflection, to prevent the stray light from entering the receiving optical path. In still another possible implementation of the first aspect, the optical element belongs to the detection apparatus, that is, the detection apparatus includes the optical element. For example, the optical element is a window of the detection apparatus.

In still another possible implementation of the first aspect, the isolation buffer member includes the first surface facing the optical element, and the optical element includes the second surface facing the isolation buffer member. The second surface includes a contact region, the contact region is opposite to the first surface, and an anti-diffraction layer is disposed outside an edge of a first region. The anti-diffraction layer can suppress blade edge diffraction, to further reduce stray light inside the detection apparatus.

In still another possible implementation of the first aspect, the detection apparatus is disposed in a terminal, and the optical element is a windshield of the terminal.

In still another possible implementation of the first aspect, the detection apparatus further includes a bottom housing, the bottom housing includes a bottom plate and a side wall disposed around the bottom plate, and the emitting module and the receiving module are disposed in space enclosed by the bottom plate and the side wall. The emitting module and/or the receiving module are/is fastened to the bottom housing.

In still another possible implementation of the first aspect, the emitting module is disposed close to the bottom housing.

In still another possible implementation of the first aspect, the emitting module is thermally connected to the bottom housing, to further improve heat dissipation efficiency. Further, the receiving module is thermally connected to the bottom housing.

In still another possible implementation of the first aspect, there is an included angle between a center line of a field of view of the emitting module and the bottom plate.

In still another possible implementation of the first aspect, in a thickness direction of the bottom plate, a center of the field of view of the emitting module does not overlap a center of a window.

In still another possible implementation of the first aspect, the emitting module includes a laser emitting chip, and the laser emitting lens is one VCSEL chip, or is formed by stitching a plurality of VCSEL chips.

In still another possible implementation of the first aspect, the emitting module further includes an emitting lens, and the emitting lens is a rotationally symmetric lens.

In still another possible implementation of the first aspect, the receiving module includes an array receiver.

In still another possible implementation of the first aspect, there is an included angle between a center line of a field of view of the receiving module and the bottom plate.

In still another possible implementation of the first aspect, the receiving module further includes a receiving lens, and the receiving lens is a rotationally symmetric lens.

According to a second aspect, an embodiment of this application provides a detection apparatus. The detection apparatus includes an emitting module, a receiving module, and a bottom housing. The emitting module is configured to emit detection light, and the receiving module is configured to receive return light of the detection light. The bottom housing includes a bottom plate and a side wall disposed around the bottom plate, and the emitting module and the receiving module are disposed in space enclosed by the bottom plate and the side wall. The emitting module and/or the receiving module are/is fastened to the bottom housing.

The emitting module is disposed close to the bottom housing. For example, the emitting module is disposed between the bottom plate and the receiving module. For another example, a distance between the emitting module and the bottom plate of the bottom housing is less than a fifth distance. Optionally, the fifth distance is a distance between a light-emitting surface of the emitting module and a bottom surface of the emitting module. Alternatively, optionally, the fifth distance is a thickness of the emitting module along the bottom plate. Alternatively, optionally, the fifth distance is less than 20 centimeters (cm), for example, 5 cm or 10 cm.

Because the emitting module generates heat when working, disposing the emitting module close to the bottom housing can improve heat dissipation efficiency of the emitting module. This helps ensure stability of detection performance of the detection apparatus and prolong a service life of the detection apparatus. In addition, because a structure of the bottom housing is stable, a design in which the emitting module is close to the bottom housing can improve disposing stability of the emitting module, thereby improving overall stability of an optical path. In conclusion, the detection apparatus provided in this embodiment of this application has higher heat dissipation efficiency and higher stability. This helps ensure stable detection performance of the detection apparatus, and significantly improves reliability of the detection apparatus.

In a possible implementation of the second aspect, the emitting module is thermally connected to the bottom housing, to further improve heat dissipation efficiency. Further, the receiving module is thermally connected to the bottom housing.

In a possible implementation of the second aspect, there is an included angle between a center line of a field of view of the emitting module and the bottom plate.

In still another possible implementation of the second aspect, in a thickness direction of the bottom plate, a center of the field of view of the emitting module does not overlap a center of a window.

In still another possible implementation of the second aspect, the emitting module includes a laser emitting chip, and the laser emitting lens is one VCSEL chip, or is formed by stitching a plurality of VCSEL chips.

In still another possible implementation of the second aspect, the emitting module further includes an emitting lens, and the emitting lens is a rotationally symmetric lens.

In still another possible implementation of the second aspect, the receiving module includes an array receiver.

In still another possible implementation of the second aspect, there is an included angle between a center line of a field of view of the receiving module and the bottom plate.

In still another possible implementation of the second aspect, in the thickness direction of the bottom plate, a center of the field of view of the receiving module does not overlap the center of the window.

In still another possible implementation of the second aspect, the receiving module further includes a receiving lens, and the receiving lens is a rotationally symmetric lens.

In still another possible implementation of the second aspect, the detection light is propagated to the outside of the detection apparatus through an optical element, and the return light passes through the optical element. The detection apparatus further includes an isolation buffer member, and the isolation buffer member is disposed inside the detection apparatus, and is disposed between a main optical path of the detection light and a main optical path of the return light. A gap between the isolation buffer member and the optical element is less than a first distance. Further, the isolation buffer member is made of a flexible material.

In still another possible implementation of the second aspect, the emitting module and the receiving module are off-axis architectures.

In still another possible implementation of the second aspect, the isolation buffer member is in contact with and connected to the optical element, or the first distance is a thickness of the isolation buffer member in a first direction, and the first direction is a direction from a main optical axis of the detection light to a main optical axis of the return light.

In still another possible implementation of the second aspect, the detection apparatus further includes a partition plate, and the partition plate is disposed between the main optical path of the detection light and the main optical path of the return light, and is disposed on a side that is of the isolation buffer member and that is away from the optical element. Optionally, a hardness of the isolation buffer member is less than a hardness of the partition plate.

In still another possible implementation of the second aspect, in a thickness direction of the partition plate, the thickness of the isolation buffer member is greater than or equal to a thickness of the partition plate.

In still another possible implementation of the second aspect, the detection apparatus further includes a scanning module. The scanning module rotates along a movable shaft. The scanning module includes a first scanning region located on one side of the partition plate and a second scanning region located on the other side of the partition plate. The first scanning region and the emitting module are located on a same side of the partition plate, and the second scanning region and the receiving module are located on a same side of the partition plate.

In still another possible implementation of the second aspect, an opening is disposed on the partition plate, the opening penetrates the partition plate in the thickness direction of the partition plate, and the scanning module passes through the opening.

In still another possible implementation of the second aspect, the scanning module further includes an isolation part, and the isolation part protrudes from a plurality of reflective surfaces that are of the scanning module and that are disposed around a rotation shaft, and encircles the rotation shaft. Further, the isolation part is located in the opening of the partition plate, and an outer peripheral edge that is of the isolation part and that faces away from the reflective surfaces is spaced from and opposite to an inner wall surface of the opening.

In still another possible implementation of the second aspect, in a direction perpendicular to the thickness direction of the partition plate, a spacing between the isolation part and the inner wall surface of the opening is the first distance, the thickness of the partition plate is a second distance, and the first distance is less than the second distance. Optionally, a ratio of the second distance to the first distance is greater than or equal to 2.

In still another possible implementation of the second aspect, the flexible material includes one or more of foam, a Mylar film, silicon gel, or the like.

In still another possible implementation of the second aspect, when the flexible material includes the foam, a diameter of a foam hole of the foam is greater than or equal to 0.1 millimeters (mm).

In still another possible implementation of the second aspect, the isolation buffer member includes a first surface facing the optical element, the optical element includes a second surface facing the isolation buffer member, a length of the first surface in the first direction is a third distance, and the first direction is the direction from the main optical axis of the detection light to the main optical axis of the return light. A thickness of the optical element in a second direction is a fourth distance, the second direction is a direction perpendicular to the second surface, and the third distance is greater than the fourth distance.

In still another possible implementation of the second aspect, a ratio of the third distance to the fourth distance falls within [1.4, 2], for example, is 1.5.

In still another possible implementation of the second aspect, the length of the first surface in the first direction is positively correlated with a reflectivity of the optical element.

In still another possible implementation of the second aspect, the optical element belongs to the detection apparatus, that is, the detection apparatus includes the optical element. For example, the optical element is a window of the detection apparatus.

In still another possible implementation of the second aspect, the isolation buffer member includes the first surface facing the optical element, and the optical element includes the second surface facing the isolation buffer member. The second surface includes a contact region, the contact region is opposite to the first surface, and an anti-diffraction layer is disposed outside an edge of a first region.

In still another possible implementation of the second aspect, the detection apparatus is disposed in a terminal, and the optical element is a windshield of the terminal.

According to a third aspect, this application provides a lidar, including the detection apparatus described in any one of the first aspect or the second aspect.

According to a fourth aspect, this application provides a terminal, including the detection apparatus described in any one of the first aspect or the second aspect, or including the lidar described in the third aspect.

In a possible implementation of the fourth aspect, the optical element belongs to the terminal. For example, the optical element is a windshield of the terminal. An isolation buffer member in the detection apparatus includes a first surface facing the optical element, the windshield includes a second surface facing the isolation buffer member, the second surface includes a contact region, the contact region is opposite to the first surface, and an anti-diffraction layer is disposed outside an edge of a first region.

In some solutions, the anti-diffraction layer can suppress blade edge diffraction, to further reduce stray light inside the detection apparatus.

### BRIEF DESCRIPTION OF DRAWINGS

The following briefly describes accompanying drawings used in describing embodiments.
FIG. 1 is a diagram of a detection apparatus using an off-axis architecture;
FIG. 2 is a diagram of a structure of a detection apparatus according to an embodiment of this application;
FIG. 3 is a diagram of cross-sectional structures of an optical element and an isolation buffer member according to an embodiment of this application;
FIG. 4 is a diagram of cross-sectional structures of another optical element and another isolation buffer member according to an embodiment of this application;
FIG. 5 is a diagram of cross-sectional structures of another optical element and another isolation buffer member according to an embodiment of this application;
FIG. 6 is a diagram of cross-sectional structures of another optical element and another isolation buffer member according to an embodiment of this application;
FIG. 7 is a diagram of a partial structure of a structure shown in FIG. 3;
FIG. 8 is a diagram of exploded structures of an optical element and an isolation buffer member according to an embodiment of this application;
FIG. 9 is a diagram of a surface of an optical element according to an embodiment of this application;
FIG. 10 is a top view of a detection apparatus according to an embodiment of this application;
FIG. 11 is a diagram of a structure of another detection apparatus according to an embodiment of this application;
FIG. 12 is a diagram of a structure of another detection apparatus according to an embodiment of this application;
FIG. 13 is a diagram of a disassembled structure of a detection apparatus shown in FIG. 12;
FIG. 14 is a diagram of a cross-sectional structure of a detection apparatus shown in FIG. 12 sectioned along a line A-A;
FIG. 15 is a diagram of a structure of another detection apparatus according to an embodiment of this application;
FIG. 16 is a diagram of a structure of a bottom housing in a detection apparatus shown in FIG. 15;
FIG. 17 is a diagram of a connection structure in a detection apparatus according to an embodiment of this application;
FIG. 18 is a diagram of a structure of another detection apparatus according to an embodiment of this application;
FIG. 19 is a diagram of an optical path according to an embodiment of this application;
FIG. 20 is an application diagram of a detection apparatus according to an embodiment of this application;
FIG. 21 is a diagram of a position of a light spot on a window according to an embodiment of this application;
FIG. 22 is a diagram of another optical path according to an embodiment of this application;
FIG. 23 is a diagram of a structure of an emitting module according to an embodiment of this application;
FIG. 24 is a diagram of a structure of a receiving module according to an embodiment of this application; and
FIG. 25 is a diagram of a vehicle according to an embodiment of this application.

### DESCRIPTION OF EMBODIMENTS

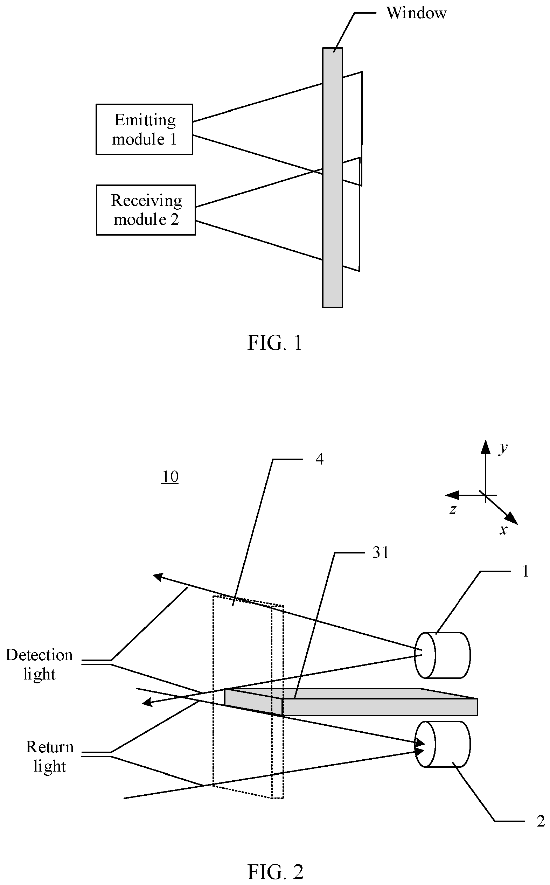

Stray light inside a detection apparatus severely affects detection performance of the detection apparatus. The detection apparatus using an off-axis architecture in FIG. 1 is used as an example. Although the detection apparatus uses the off-axis architecture, there is also a shared optical element for emitting and receiving, for example, a shared window for emitting and receiving. Reflection (or scattering, diffraction, or the like) generated on the optical element forms the stray light, affecting the detection performance of the detection apparatus. After the stray light triggers a receiver to collect data, the detection apparatus may mistakenly consider that there is a target ahead, resulting in false detection. In addition, the stray light may submerge a real echo, or after the stray light triggers the receiver to collect the data, the real echo may arrive within quenching time. In this case, the real echo cannot be detected, causing miss detection of the detection apparatus.

In addition to reflection effect on a surface of the optical element, a defect of another optical element (or referred to as a white material) or a non-optical element (or referred to as a black material) in the detection apparatus may form internal stray light.

In view of this, embodiments of this application provide a detection apparatus, a lidar, and a terminal, to reduce impact of stray light on return light and improve detection performance of the detection apparatus while ensuring reliability of the detection apparatus.

FIG. 2 is a diagram of a structure of a detection apparatus according to an embodiment of this application. A detection apparatus 10 includes an emitting module 1, a receiving module 2, and an isolation buffer member 31.

The emitting module 1 is configured to emit detection light. For example, the emitting module 1 may include one or more of the following light sources: a vertical cavity surface emitting laser (vertical cavity surface emitting laser, VCSEL), a photonic crystal surface emitting laser (photonic crystal surface emitting semiconductor lasers, PCSEL), an edge emitting laser (edge emitting laser, EEL), a laser diode (laser diode, LD), a distributed feedback laser diode (distributed feedback LD, DFB-LD), a grating coupled sampling reflective laser diode (Grating coupled sampling reflection LD, GCSR-LD), a micro-opto-electro-mechanical system laser diode (micro opto electro mechanical system LD, MOEMS-LD), or the like.

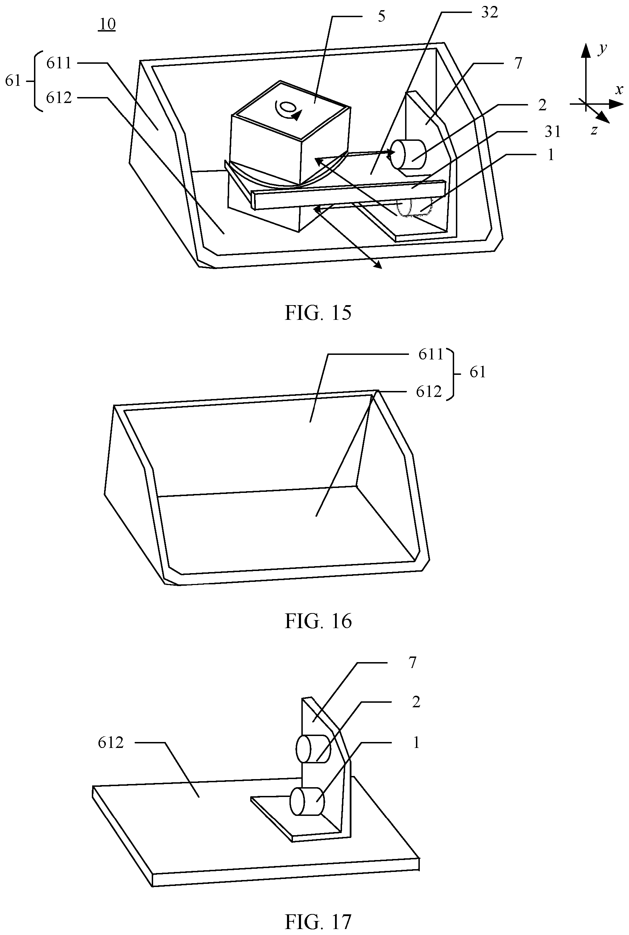

In a possible implementation, the emitting module 1 includes a laser emitting chip 11, and the laser emitting chip 11 includes one or more of the foregoing plurality of light sources. In a possible case, the emitting module 1 includes one VCSEL chip. In another possible case, the emitting module 1 includes a laser emitting chip formed by stitching a plurality of VCSEL chips. In the latter case, stitching the plurality of VCSEL chips can improve emitting power of the detection apparatus, reduce blind spots of the detection apparatus, and improve detection performance. In addition, when an area of a light emitting region is the same, a manner of stitching the plurality of VCSEL chips has less stress than a manner of directly using an entire VCSEL chip of an approximate size, and stitching the plurality of chips can further have higher heat dissipation efficiency, and further help reduce crosstalk of the emitting module 1. For a possible design of the emitting module 1, refer to the following descriptions, for example, descriptions in the embodiments shown in FIG. 15, FIG. 18, and FIG. 23.

The receiving module 2 is configured to receive a light beam, where the light beam includes return light of the detection light (or referred to as return light for short). For example, the receiving module 2 may include a detector, and the detector may include but is not limited to one or more of detection elements such as a single-photon avalanche diode (single-photon avalanche diode, SPAD), a silicon photomultiplier (Silicon photomultiplier, SiPM), a semiconductor avalanche photodiode (avalanche photo detector, APD), a multi-pixel photon counter (multi-pixel photon counter, MPPC), or an electron multiplication charge coupled device (electron multiplying charge-coupled device, EMCCD). The detection elements may be arranged in an array to form an array detector. For example, the receiving module 2 may include an SPAD array. For a possible design of the receiving module 2, refer to the following descriptions, for example, descriptions in the embodiments shown in FIG. 15, FIG. 18, and FIG. 24.

In this embodiment of this application, both the detection light and the return light pass through an optical element 4. To avoid impact of stray light on a receiving optical path, an isolation buffer member 31 is disposed inside the detection apparatus 10, and may be disposed between a main optical path of the detection light and a main optical path of the return light, to isolate an emitting optical path from the receiving optical path. With reference to FIG. 2, the isolation buffer member 31 includes two surfaces disposed in a Y direction. In the Y direction, the emitting module 1 and the receiving module 2 are respectively disposed on two sides of the isolation buffer member 31.

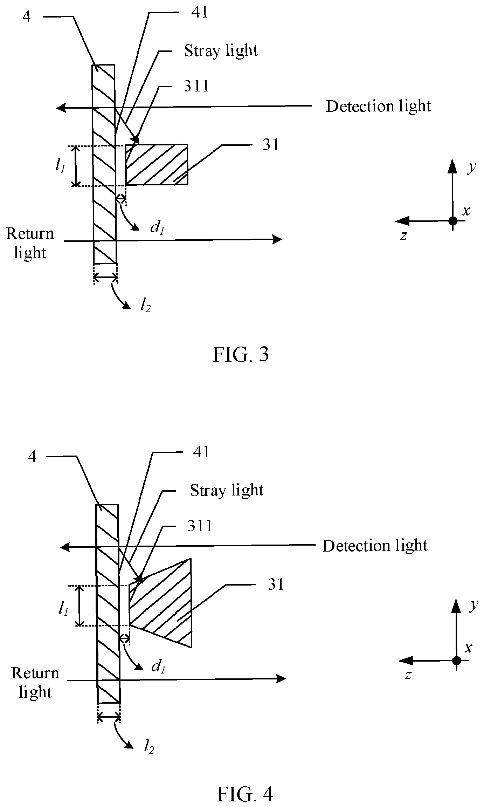

With reference to FIG. 3, the detection light and the return light of the detection apparatus 10 respectively pass through two sides of the isolation buffer member 31. In a possible case, when the detection light passes through the optical element 4, stray light is generated, but the stray light may be blocked by the isolation buffer member 31 and is not propagated to an optical path of the return light, thereby improving effectiveness of an optical signal received by the detection apparatus, and improving detection accuracy.

Further, a distance between the isolation buffer member 31 and the optical element 4 is short, and a gap between the isolation buffer member 31 and the optical element 4 is small (including a case in which the isolation buffer member 31 abuts against the optical element 4 and there is no gap). In this way, isolation between the emitting optical path and the receiving optical path can be improved. With reference to FIG. 3, when the distance between the isolation buffer member 31 and the optical element 4 is long, some stray light may pass through the gap between the isolation buffer member 31 and the optical element 4 and is propagated to the receiving optical path. Therefore, reducing the gap between the isolation buffer member 31 and the optical element 4 can further reduce a possibility that the stray light is propagated to the receiving optical path.

In some implementations, the isolation buffer member 31 is made of a flexible material. For example, the flexible material includes one or more of foam, a Mylar film, silicon gel, or the like. In a possible example, the isolation buffer member 31 is made of the foam. Because there are foam holes in the foam, the foam holes may be used as light extinction cavities to further block propagation of the stray light, thereby further reducing stray light inside the detection apparatus. Optionally, when the isolation buffer member is made of the foam, because a diameter of the foam hole is large, for example, is greater than 0.1 mm, good blocking effect can be achieved.

Because the optical element 4 is usually a precision element, a surface of the optical element 4 needs to ensure specific flatness to improve a transmittance (or a reflectivity), and the optical element is usually made of a brittle material, and is fragile and easily broken. Therefore, the isolation buffer member is made of the flexible material, to reduce a possibility that the isolation buffer member scratches or breaks a surrounding component (for example, the optical element 4), and improve reliability of the detection apparatus. On this basis, the isolation buffer member 31 may be designed close to the optical element, to improve isolation.

In some cases, because the emitting optical path is isolated from the receiving optical path, reflectivity requirements on the optical element and a non-optical element in the detection apparatus may also be reduced, thereby greatly reducing overall costs of the detection apparatus.

In addition, in a possible case, if the isolation buffer member 31 is not disposed, to avoid severe interference between the emitting optical path and the receiving optical path, a specific spacing needs to be disposed between the emitting module 1 and the receiving module 2. In this case, an overall volume of the detection apparatus is large. For example, when the emitting module and the receiving module are arranged vertically, in some solutions, a large distance is set between the emitting module 1 and the receiving module 2 to avoid interference of the emitting optical path to the receiving optical path. In this case, a height of the detection apparatus is large. This is not conducive to design of a mounting position of the detection apparatus. However, in this application, the isolation buffer member 31 isolates the emitting optical path from the receiving optical path, so that the spacing between the emitting module 1 and the receiving module 2 can be reduced, thereby reducing an overall size (for example, reducing a height) of the detection apparatus, facilitating miniaturization development of the detection apparatus, and facilitating design of a mounting position of the detection apparatus.

In some implementations, the emitting module 1 and the receiving module 2 are off-axis architectures. In some solutions, the off-axis architecture is an optical path architecture in which a main optical axis of a light beam emitted by a reflective module does not overlap a main optical axis of a receiving module. In the off-axis architecture, an emitting optical path and a receiving optical path are disposed separately, and are easy to be isolated. When this solution is applied to the off-axis architecture, the emitting optical path can be well isolated from the receiving optical path, and detection performance of the detection apparatus can be improved. Certainly, for some detection apparatuses using a coaxial architecture, an emitting optical path is separated from a receiving optical path in some regions. In this case, a position at which the emitting optical path is separated from the receiving optical path may be applicable to this embodiment of this application.

In some solutions, an interior of the detection apparatus 10 may be understood as an accommodation space formed by a housing of the detection apparatus 10. In some solutions, the housing of the detection apparatus 10 has a view window, and the optical element 4 may be mounted in the view window of the housing as the view window. Optionally, the isolation buffer member 31, the emitting module 1, and the receiving module 2 are disposed on a same side of the optical element 4. In some solutions, the housing of the detection apparatus 10 has a light-passing opening, and the optical element 4 is a component independent of the detection apparatus 10. However, in this case, the light-passing opening of the detection apparatus 10 cooperates with the optical element 4, and the detection light sequentially passes through the light-passing opening of the detection apparatus 10 and the optical element 4 for emission, and the return light is propagated to the receiving module 2 sequentially through the optical element 4 and the light-passing opening of the detection apparatus 10.

Optionally, the optical element includes but is not limited to one or more of a window, a lens, a windshield, a reflector, or the like. In some embodiments of this application, an example in which the optical element is a window or a windshield is used for description.

In some implementations, the optical element 4 belongs to the detection apparatus 10, that is, the detection apparatus 10 includes the optical element 4. For example, the optical element is a window of the detection apparatus. In some other possible implementations, the optical element 4 is not a component of the detection apparatus 10. For example, the detection apparatus 10 is disposed in a terminal, and the optical element 4 is a component of the terminal, for example, a windshield or a transparent housing of the terminal.

In some solutions, the gap between the isolation buffer member 31 and the optical element 4 is less than a first distance. The following describes two possible cases of the spacing between the isolation buffer member 31 and the optical element 4 by using examples.

Case 1: The isolation buffer member 31 is in contact with and connected to the optical element 4. In a possible implementation, the isolation buffer member 31 may be in contact with a surface of the optical element 4. For example, with reference to FIG. 3, the isolation buffer member 31 may include a first surface 311 facing the optical element 4, the optical element 4 may include a second surface 41 facing the isolation buffer member 31, and the first surface 311 is in contact with the second surface 41. In this case, a distance between the first surface 311 and the second surface 41 is represented as *d*₁, and *d*₁=0. In some optional solutions, the isolation buffer member 31 is compressed by the optical element 4, that is, is in a compressed state, so that the isolation buffer member 31 and the optical element 4 are in closer contact.

Case 2: There is a spacing between the isolation buffer member 31 and the optical element 4, and the spacing is less than the first distance. In some solutions, the first distance may be a thickness of the isolation buffer member in a first direction, and the first direction is a direction from a main optical axis of the detection light to a main optical axis of the return light (a Y direction shown in FIG. 2 and FIG. 3). In other words, when the isolation buffer member 31 is thinner, the gap should be set to be smaller. On the contrary, when the isolation buffer member 31 is thicker, the gap may be slightly larger. In conclusion, there may be a spacing between the isolation buffer member 31 and the optical element 4, but a size of the spacing does not exceed the thickness of the isolation buffer member 31. In this way, when the detection apparatus 10 implements emitting and receiving isolation, specific space is further reserved for ease of assembly. In some cases, a possibility that the optical element 4 or the entire detection apparatus is loosely mounted due to compression of the isolation buffer member 31 can be further reduced by setting the spacing, thereby improving reliability of the detection apparatus 10.

The foregoing constraint on the size of the gap is merely an example. For example, in some other solutions, the first distance may be a pre-designed distance. For example, the first distance is less than or equal to 5 mm, or the first distance is less than or equal to 10 mm.

In a possible design, the isolation buffer member 31 may be designed in a plurality of possible shapes. The following describes, from a perspective of a cross section, several designs of the isolation buffer member 31 provided in this embodiment of this application.

Design 1: A cross section of the isolation buffer member 31 is a rectangle. For example, with reference to FIG. 3, on a Y-Z plane, that is, a plane along the first direction and a second direction, an outer profile of the cross section of the isolation buffer member is a rectangle. A rectangular design can isolate a receiving optical path from an emitting optical path, and facilitates fabrication, so that mounting efficiency is higher.

Design 2: A cross section of the isolation buffer member 31 is a trapezoid. Refer to FIG. 4. On a Y-Z plane, that is, a plane along the first direction and a second direction, an outer profile of the cross section of the isolation buffer member 31 is a trapezoid. In other words, the isolation buffer member 31 may be a ladder, and an upper bottom surface (considered as the first surface 311) of the isolation buffer member 31 is a surface facing the optical element 4. In this design, a surface of a waist side of the isolation buffer member 31 is inclined. This helps reflect stray light to the outside of the detection apparatus 10, and reduce stray light inside the detection apparatus. In addition, such a design reduces an area of the surface facing the optical element 4, and facilitates a lightweight design of the detection apparatus.

In addition, in some solutions, the isolation buffer member 31 is disposed between two components. When the isolation buffer member 31 is in contact with and connected to the optical element 4, the trapezoidal design can reduce stress generated by the isolation buffer member 31 in a case of a same compression amount, to prevent components on two sides from being crushed. In some solutions, a groove, a cavity, or the like may be further disposed on the isolation buffer member 31, to further reduce the stress generated by the isolation buffer member 31 in the case of the same compression amount.

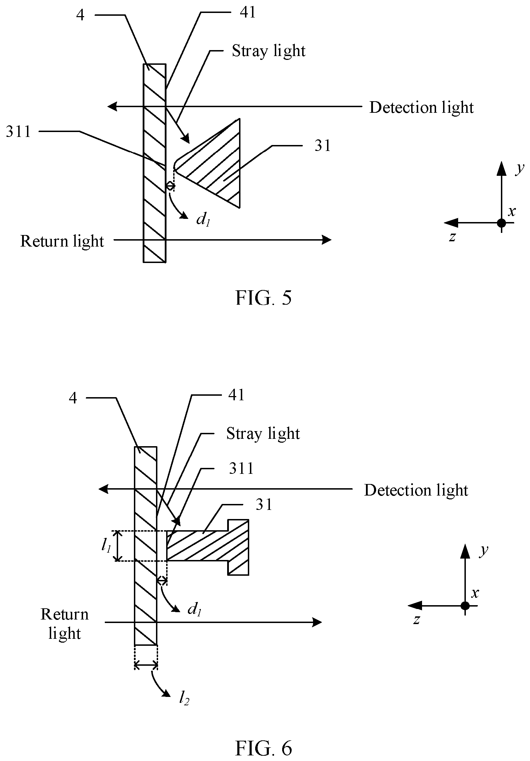

Design 3: A cross section of the isolation buffer member 31 is a triangle. Refer to FIG. 5. On a Y-Z plane, that is, a plane along the first direction and a second direction, a cross section of the isolation buffer member 31 is a triangle. In a positive direction of a Z direction shown in FIG. 5, a vertex angle of the triangle faces the optical element 4. In this way, in this design, a surface of a waist side of the isolation buffer member 31 is inclined. This helps reflect incident stray light to the outside of the detection apparatus, and reduce stray light inside the detection apparatus. In addition, an area of a surface facing the optical element 4 is reduced, and stress generated by the isolation buffer member 31 in a case of a same compression amount is reduced, thereby facilitating a lightweight design of the detection apparatus.

Optionally, a side angle of the isolation buffer member 31 may be designed as a rounded corner, and/or an edge of the isolation buffer member 31 may be an arc surface. As shown in FIG. 5, an edge of a side that is of the isolation buffer member 31 and that faces the optical element 4 may be in an arc shape. In this way, contact is smoother, the optical element 4 is avoided from being scratched, and reliability of the detection apparatus 10 is improved. In addition, blade edge diffraction can be suppressed, helping reduce stray light inside the detection apparatus 10.

Design 4: The isolation buffer member 31 is a component formed by splicing a plurality of structures. Refer to FIG. 6. On a Y-Z plane, that is, a plane along the first direction and a second direction, a cross section of the isolation buffer member 31 is in a "T" shape, or is considered as a shape formed by splicing two rectangles. Certainly, in some solutions, the isolation buffer member may be spliced into another shape, for example, a "Z" shape, an "I" shape, or an inverted "U" shape.

The foregoing several designs are merely examples, and the foregoing designs may be further combined. For example, a cross section of the isolation buffer member 31 may be a pattern formed by combining a rectangle and a triangle. Combinations are not enumerated herein.

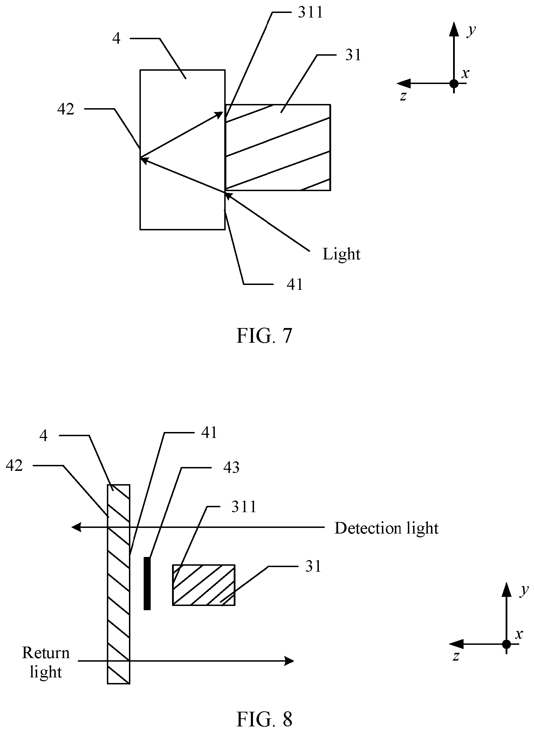

In a possible implementation, the thickness of the isolation buffer member 31 is related to a thickness of the optical element 4. With reference to FIG. 3, the thickness of the isolation buffer member 31 is a thickness in the first direction (the Y direction), that is, *l*₁ shown in FIG. 3. The thickness of the optical element 4 is a thickness in the second direction (the Z direction), that is, *l*₂ shown in FIG. 3. Refer to FIG. 3, FIG. 7, and FIG. 14. FIG. 7 is a diagram of a partial structure of the structure shown in FIG. 3. The optical element 4 has two light-passing surfaces disposed opposite to each other in the second direction, for example, a second surface 41 and a third surface 42, and a light beam passing through the optical element 4 may be reflected (or scattered, diffracted, or the like) on both the two surfaces, to form stray light. When the thickness of the optical element 4 is larger, after light is reflected on the third surface 42, the light can travel a larger distance in the first direction (Y). Therefore, the thickness of the isolation buffer member 31 also needs to be designed to be larger, to prevent stray light from crossing into the receiving optical path. Optionally, a thickness design of the isolation buffer member 31 (or a design of a length of the first surface in the first aspect) may meet the following condition: The isolation buffer member 31 can block stray light reflected at least once on the third surface 42. With reference to FIG. 7, when stray light enters the optical element 4 from the inside of the detection apparatus 10, and is reflected on the third surface 42 of the optical element 4, the isolation buffer member 31 can block the stray light formed by reflection, to prevent the stray light from entering the receiving optical path.

In some cases, the isolation buffer member is a rectangle or an irregular pattern. In these cases, the surface that is of the isolation buffer member and that is in contact with the optical element 4 is designed to be wide, to achieve the foregoing effect. In some possible solutions, referring to FIG. 3, FIG. 4, and FIG. 7, the isolation buffer member 31 includes the first surface 311 facing the optical element 4, the optical element 4 includes the second surface 41 facing the isolation buffer member, a length of the first surface 311 in the first direction (for example, the Y direction) is a third distance (namely, *l*₁), and the first direction is the direction from the main optical axis of the detection light to the main optical axis of the return light. The thickness of the optical element in the second direction is a fourth distance (namely, *l*₂), the second direction is a direction perpendicular to the second surface, and the third distance is greater than the fourth distance, that is, *l*₁≥*l*_{2.}

Optionally, the third distance and the fourth distance meet a specific proportional relationship, for example, a ratio of the third distance to the fourth distance falls within [1.4, 2]. For example, the ratio between the third distance and the fourth distance is 1.5. For example, when the cross section of the isolation buffer member 31 is rectangular, the thickness of the isolation buffer member 31 is 1.5 times the thickness of the optical element 4.

In a possible implementation, the thickness of the isolation buffer member 31 is positively correlated with a reflectivity of the optical element 4. It may be understood that a higher reflectivity of the optical element 4 indicates more stray light generated on the surface, and the thickness of the isolation buffer member is correspondingly designed to be larger, so that stray light inside the detection apparatus can be reduced. Similarly, the thickness of the isolation buffer member 31 herein may alternatively be replaced with a length, in the first direction (for example, the Y direction), of a surface (namely, the first surface 311) that is of the isolation buffer member 31 and that faces the optical element 4. The first direction is a direction from the emitting optical path to the receiving optical path, that is, the thickness direction of the isolation buffer member.

In some possible implementations, a light-absorbing layer may also be disposed on the optical element 4. FIG. 8 is a diagram of exploded structures of an optical element and an isolation buffer member according to an embodiment of this application. A light-absorbing layer 43 may be disposed on the optical element 4, the light-absorbing layer 43 may be designed on the second surface 41 of the optical element 4, and a position of the light-absorbing layer 43 is opposite to a position of the isolation buffer member 31. In some cases, the light-absorbing layer may block stray light generated on the third surface 42. Designing the light-absorbing layer can reduce a thickness requirement on the isolation buffer member 31, thereby facilitating a lightweight design of the detection apparatus. For example, the light-absorbing layer may be attached to a surface of the optical element 4 through coating, silkscreen, electroplating, or the like.

Optionally, a length of the light-absorbing layer 43 in the first direction (for example, the Y direction) is greater than the thickness of the isolation buffer member 31 (or greater than the length of the first surface 311 in the first direction).

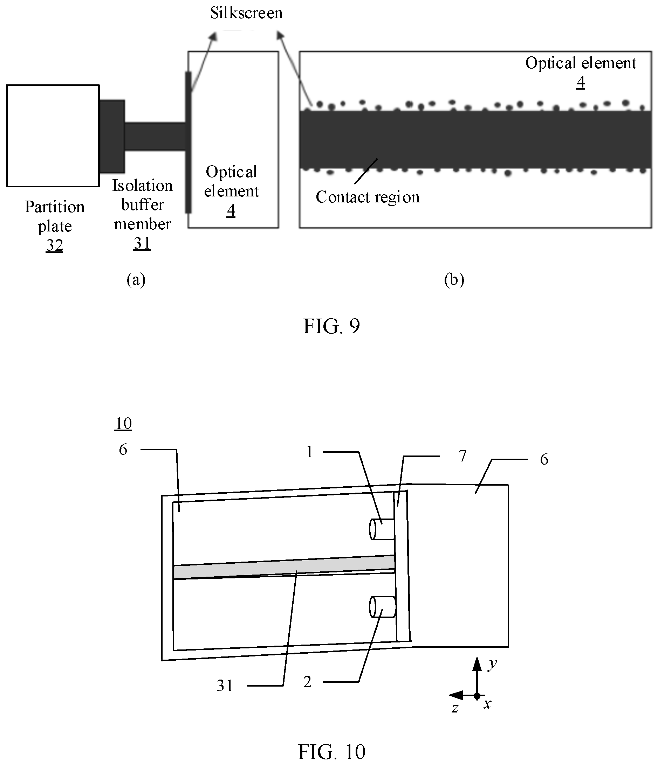

In some other possible implementations, an anti-diffraction layer may be further disposed on the surface of the optical element 4. For example, the anti-diffraction layer may be disposed on the surface of the optical element 4 through coating, silkscreen, electroplating, glue dispensing, or the like. FIG. 9 is a diagram of a surface of an optical element according to an embodiment of this application. A part (a) in FIG. 9 shows a side view of a structure including the optical element, and a part (b) in FIG. 9 shows a front view of the optical element. It can be seen that the surface that is of the optical element 4 and that faces the isolation buffer member includes a contact region, and the contact region is opposite to the surface that is of the isolation buffer member 31 and that faces the optical element 4. The anti-diffraction layer (silkscreen shown in FIG. 9 is used as an example) is disposed outside an edge of the first region, and an edge of the anti-diffraction layer is rough, so that blade edge diffraction can be suppressed, and stray light inside the detection apparatus can be further reduced. Further, the anti-diffraction layer is not only disposed inside a contact edge, but also may cover the contact region, to further improve blocking effect. A partition plate 32 shown in FIG. 9 is an optional design, and is described below.

In some cases, when the flexible material is the silicon gel, an anti-diffraction layer is disposed on a surface of the optical element 4. Because a surface of the silicon gel is flat, a diffraction phenomenon occurs. To mitigate the diffraction effect, the anti-diffraction layer with the rough edge is used.

Optionally, the anti-diffraction layer shown in FIG. 9 may be considered as the light-absorbing layer 43.

In a possible implementation, the isolation buffer member 31 may abut against or may be disposed close to (for example, a spacing is less than the first distance) another component (for example, the housing or a mounting bracket of the emitting module) in the detection apparatus, to improve isolation. FIG. 10 is a top view of a detection apparatus according to an embodiment of this application. The detection apparatus 10 further includes a housing 6 (for example, including a bottom housing, a middle housing, or an integrated housing), and a mechanical part 7 on which the emitting module 1 and the receiving module 2 are mounted. Two side edges of the isolation buffer member 31 in the Z direction are respectively in contact with the housing 6 and the mechanical part 7, to implement isolation. In some solutions, a lightening hole may be disposed on the isolation buffer member 31, to reduce a weight and improve heat dissipation efficiency.

The flexible material is prone to deformation, and it is difficult to maintain structural stability especially when the flexible material extends over a long distance. In a possible implementation, the detection apparatus 10 further includes a partition plate 32, and the partition plate 32 is disposed between the main optical path of the detection light and the main optical path of the return light, and is disposed on a side that is of the isolation buffer member 31 and that is away from the optical element 4.

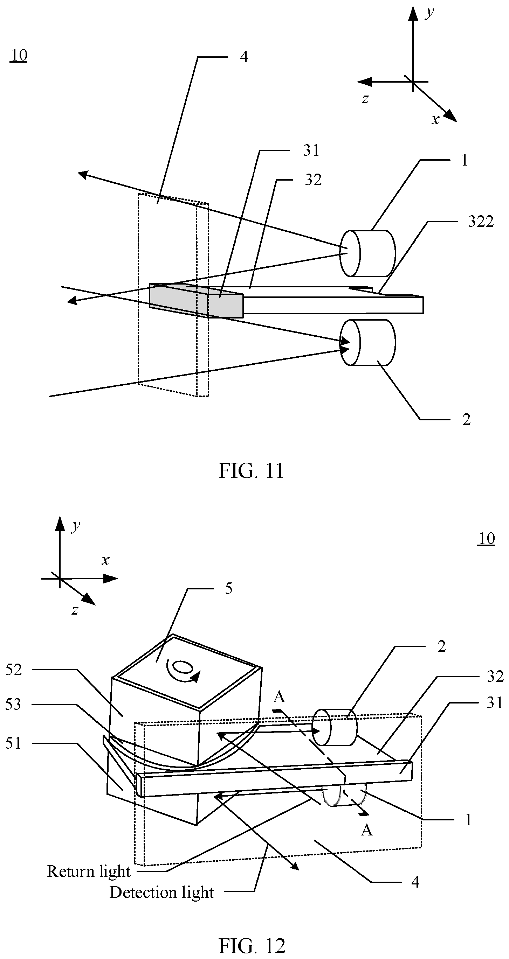

FIG. 11 is a diagram of a structure of another detection apparatus according to an embodiment of this application. The detection apparatus 10 further includes the partition plate 32. The partition plate 32, the isolation buffer member 31, and the optical element 4 are sequentially disposed on an emitting optical path, and are disposed between the main optical path of the detection light and the main optical path of the return light. In this way, isolation between the emitting optical path and the receiving optical path can be further improved, and the emitting optical path can be completely isolated from the receiving optical path.

In some possible implementations, the partition plate 32 may be made of metal, an organic material, an inorganic non-metal material, or the like. Further, a hardness of the isolation buffer member 31 is less than a hardness of the partition plate 32. This can ensure that the partition plate stably maintains a structural form of the partition plate, and improve overall stability of the detection apparatus.

In some possible implementations, in a thickness direction of the partition plate 32, the thickness of the isolation buffer member 31 is greater than or equal to a thickness of the partition plate 32. For example, the thickness direction of the partition plate 32 may be the direction from the emitting optical path (that is, an optical path of the detection light) to the receiving optical path (that is, an optical path of the return light), for example, a Y direction shown in FIG. 11. The thickness of the partition plate 32 may be designed to be small, to reduce a weight of the detection apparatus and facilitate lightweight development of the detection apparatus.

In some other possible implementations, when the isolation buffer member 31 is in contact with and connected to the optical element 4, the thickness of the isolation buffer member 31 is less than or equal to the thickness of the partition plate 32 in the thickness direction of the partition plate 32.

In some possible implementations, the partition plate 32 is configured to isolate an optical path of the emitting module 1 from an optical path of the receiving module 2. Similarly, the isolation buffer member 31 is configured to isolate the optical path of the emitting module 1 from the optical path of the receiving module 2. The partition plate 32 has a support function and can stably maintain the structural form of the partition plate 32, and the isolation buffer member 31 is disposed close to the optical element 4 to avoid scratching and breaking the optical element 4. In this way, isolation is implemented, and reliability of the detection apparatus 10 can be improved.

Optionally, the partition plate 32 may be designed in a plurality of forms. In some solutions, with reference to FIG. 11, the emitting module 1 and the receiving module 2 may be disposed in a protruding manner, for example, may protrude from the mechanical part 7 (not shown in the figure). In a direction (for example, a Z direction) of the main optical path of the detection light, an opening (referred to as the second opening 322 for ease of differentiation) is disposed on a side that is of the partition plate 32 and that is close to the emitting module 1 and the receiving module 2. In a propagation direction of the detection light (for example, a positive direction of the Z direction), a deepest part of the second opening 322 is lower than a light-emitting surface of the emitting module. Because a light beam is emitted from the light-emitting surface of the emitting module 1, disposing the second opening 322 lower than the emitting module at an edge part can isolate the emitting optical path, and reduce a weight of the partition plate 32. In this way, heat can be transferred through the opening, thereby improving heat dissipation efficiency. Similarly, in an opposite direction of a propagation direction of the return light (for example, the positive direction of the Z direction), the deepest part of the second opening 322 is lower than a light-passing surface of the receiving module 2.

To improve a field of view of the detection apparatus, in some possible solutions, a scanning module may be disposed in the detection apparatus 10, to scan object space with the detection light from a plurality of angles, and correspondingly receive the return light of the detection light at a plurality of angles. An architecture provided in this embodiment of this application is also applicable to a scanning detection apparatus.

Refer to FIG. 12, FIG. 13, and FIG. 14. The detection apparatus further includes a scanning module 5, and the scanning module 5 includes a first scanning region 51 located on one side of the partition plate 32 and a second scanning region 52 located on the other side of the partition plate. The first scanning region 51 and the emitting module 1 are located on a same side of the partition plate 32, and the second scanning region 52 and the receiving module 2 are located on a same side of the partition plate 32. For example, the first scanning region 51 is configured to reflect the detection light from the emitting module 1 to the optical element 4, and the second scanning region 52 is configured to reflect the return light from the optical element 4 to the receiving module 2. The scanning module 5 may rotate (or swing, vibrate, or the like) along a movable shaft, to form different scanning angles. The field of view is scanned through the detection light of the scanning module 5, and the receiving module 2 may further receive return light at different angles in the field of view.

Optionally, the scanning module 5 may include one or more of an oscillating mirror, a rotating mirror (polygon), a micro-electro-mechanical system (micro-electro-mechanical system, MEMS) vibrating mirror, a metal vibrating mirror, or the like. In some solutions, the scanning module may include one or more reflective surfaces, and the reflective surface may be mounted on a body of the scanning module through a patch, or the reflective surface of the scanning module and the body of the scanning module may be integrated. Optionally, a scanning manner of the scanning module 5 may be one-dimensional scanning, two-dimensional scanning, or the like.

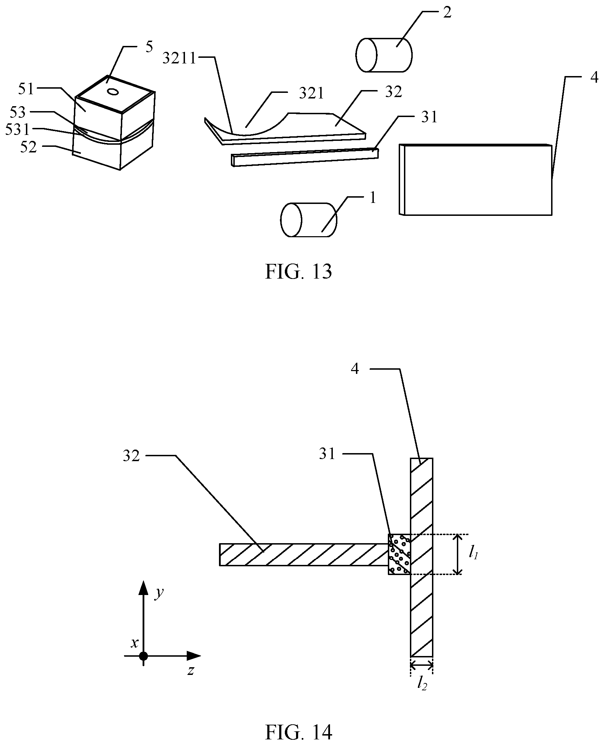

In a possible implementation, with reference to FIG. 12 and FIG. 13, an opening (referred to as a first opening 321 for ease of differentiation) is disposed on the partition plate 32, and the first opening 321 penetrates the partition plate 32 in the thickness direction of the partition plate 32. The scanning module 5 may pass through the first opening 321. The opening is disposed on the partition plate 32 to accommodate the scanning module 5, so that the emitting optical path is isolated from the receiving optical path around the scanning module 5, to avoid stray light caused by a tiny defect on a surface of the scanning module 5. In addition, a layout of components is more compact. This facilitates miniaturization development of the detection apparatus.

In a possible implementation, the scanning module 5 further includes an isolation part 53, and the isolation part 53 protrudes from the plurality of reflective surfaces that are of the scanning module and that are disposed around the rotation shaft, and encircles the rotation shaft. Because the reflective surface on the scanning module 5 is a plane, and when the scanning module moves, a pattern formed by an outer periphery of the reflective surface is a circle (or a sector), in this application, disposing the isolation part that encircles the rotation shaft on the scanning module further improves isolation of optical paths near the scanning module.

Further, the isolation part 53 is located in the first opening 321 of the partition plate 32, and an outer peripheral edge 531 that is of the isolation part and that faces away from the reflective surface is spaced from and opposite to an inner wall surface 3211 of the opening. In this way, a position of the isolation part 53 is opposite to a position of the partition plate 32, so that isolation is further improved, and impact of stray light inside the detection apparatus on the return light is reduced.

Optionally, the isolation part 53 is made of a flexible material. For example, the flexible material includes one or more of foam, a Mylar film, or silicon gel. In some cases, a material of the isolation part 53 may be the same as a material of the isolation buffer member 31. In some cases, a material of the isolation part 53 is different from a material of the isolation buffer member 31. The isolation part 53 can isolate the emitting optical path from the receiving optical path, to prevent stray light caused by a defect on a surface of the scanning module from severely affecting the return light. In addition, disposing the isolation part 53 can further reduce requirements on features such as smoothness and scattering of the scanning module, and reduce surface processing costs.

In a possible implementation, in a direction perpendicular to the thickness direction of the partition plate 32, a spacing between the isolation part 53 and the inner wall surface 3211 of the first opening 321 is the first distance, the thickness of the partition plate 32 is a second distance, and the first distance is less than the second distance. Because stray light may pass through the gap between the partition plate 32 and the isolation part 53 to reach an optical path on the other side, a size of the gap is limited herein, so that isolation between the emitting optical path and the receiving optical path can be improved.

In some implementations, the emitting module 1 and the receiving module 2 may be arranged vertically. "Vertically" herein means that the emitting module 1 and the receiving module 2 are sequentially arranged in a thickness direction of the bottom housing 61 of the detection apparatus 10, as shown in FIG. 15. In some solutions, the thickness direction of the bottom housing is a vertical direction. Correspondingly, a plane perpendicular to the vertical direction is a horizontal plane, and the horizontal plane is usually parallel to the ground. Generally, a requirement for horizontal resolution of a detection result is higher than a requirement for vertical resolution of the detection result. Therefore, the emitting module 1 and the receiving module 2 are arranged in the vertical direction, so that a parallax between the emitting module 1 and the receiving module 2 in a horizontal direction can be reduced, blind spots in the horizontal direction can be reduced, and detection effect in the horizontal direction can be improved. Especially for the detection apparatus including the scanning module 5, a scanning direction is usually horizontal (that is, scanning is performed in the horizontal direction). In this case, arranging the emitting module 1 and the receiving module 2 vertically can also reduce a parallax in the horizontal direction and improve detection performance.

In some implementations, the emitting module 1 and the receiving module 2 have no parallax in the horizontal direction. The horizontal direction herein may be a ground direction, or a direction perpendicular to the thickness direction of the bottom plate 612 (an X direction shown in FIG. 15). In this way, field of view alignment effect of the detection apparatus can be improved, and detection performance can be improved.

In some implementations, the emitting module 1 is disposed close to the bottom housing 61. Detailed content is described below.

The following describes another detection apparatus provided in this application. It should be noted that the detection apparatus described in the following embodiments may be combined with the foregoing detection apparatus.

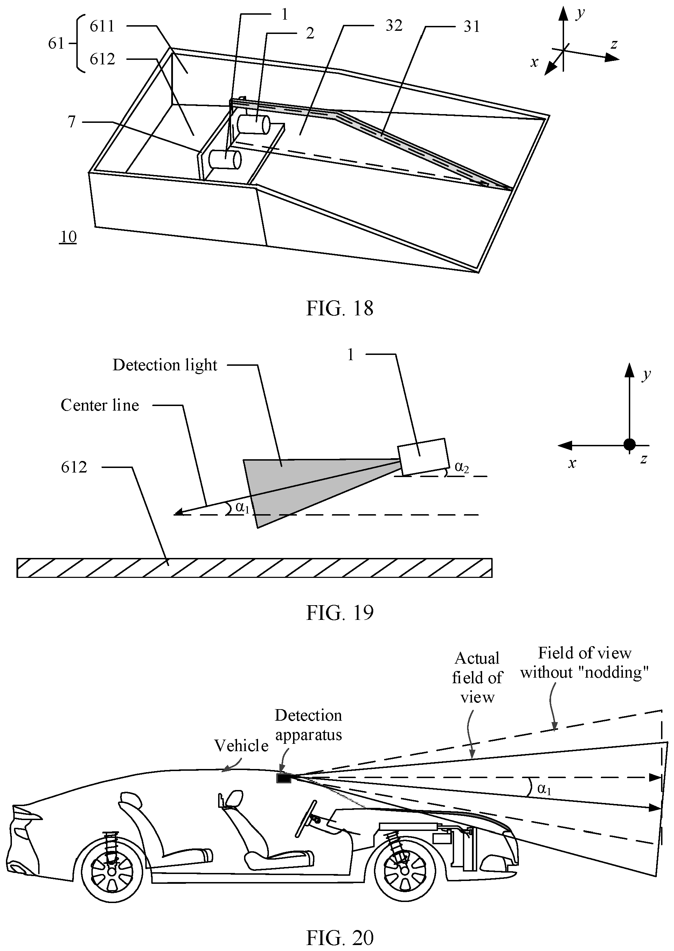

Refer to FIG. 15 and FIG. 18. An embodiment of this application further provides a detection apparatus 10. The detection apparatus 10 includes an emitting module 1, a receiving module 2, and a bottom housing 61. The emitting module 1 is configured to emit detection light, and the receiving module 2 is configured to receive return light of the detection light. For related descriptions, refer to the foregoing descriptions. With reference to FIG. 16, the bottom housing 61 includes a bottom plate 612 and a side wall 611 disposed around the bottom plate, and the emitting module 1 and the receiving module 2 are disposed in space enclosed by the bottom plate 612 and the side wall 611.

In this embodiment of this application, the emitting module 1 is fastened to the bottom housing and is disposed close to the bottom housing. For example, there may be two implementations of disposing the emitting module 1 close to the bottom housing.

Implementation 1: With reference to FIG. 15, the emitting module 1 and the receiving module 2 are arranged vertically in a thickness direction of the bottom plate 612 of the bottom housing 61, and the emitting module 1 is closer to the bottom plate 612 than the receiving module 2. Refer to FIG. 15. In a third direction (for example, a Y-axis direction shown in FIG. 15), the emitting module 1, the receiving module 2, and the bottom plate 612 of the bottom housing 61 are sequentially disposed, and the emitting module 1 is disposed between the bottom plate 612 of the bottom housing 61 and the receiving module 2.

Implementation 2: A distance between the emitting module 1 and the bottom plate 612 of the bottom housing 61 is less than a fifth distance.

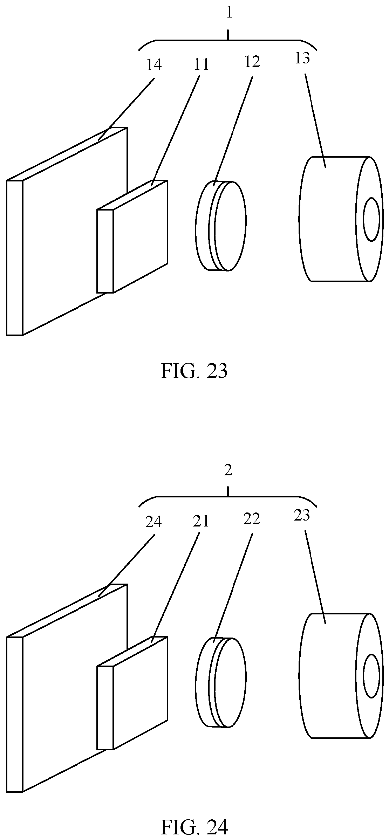

For example, the fifth distance is a distance between a light-emitting surface of the emitting module 1 and a bottom surface of the emitting module 1. With reference to FIG. 23, when the emitting module includes a laser emitting chip 11, an emitting lens 12, a first lens barrel 13, and a circuit board 14, the light-emitting surface of the emitting module 1 is a surface that is of the first lens barrel 13 and that is away from the emitting lens 12, and the bottom surface of the emitting module 1 is a surface that is of the circuit board 14 of the emitting module 1 and that is away from the laser emitting chip 11, or the bottom surface of the emitting module 1 is a surface that is of the laser emitting chip 11 and that is away from the emitting lens 12.

For another example, the fifth distance is a length of the emitting module in the thickness direction (for example, a Y direction shown in FIG. 15) of the bottom plate 612. Alternatively, optionally, the fifth distance is less than 20 cm, for example, is 5 cm or 10 cm.

Optionally, the emitting module 1 and the receiving module 2 may be arranged vertically or horizontally. For example, with reference to FIG. 15, in the third direction (for example, the Y-axis direction shown in FIG. 15), the emitting module 1, the receiving module 2, and the bottom plate 612 of the bottom housing 61 are sequentially disposed. In this case, a distance between the emitting module 1 and the bottom plate of the bottom housing 61 is less than the fifth distance. For another example, with reference to FIG. 18, the emitting module 1 and the receiving module 2 are sequentially disposed in a fourth direction (for example, an X-axis direction shown in FIG. 15), and the fourth direction is a direction perpendicular to the thickness direction of the bottom plate 612 (that is, perpendicular to the Y direction).

Certainly, the foregoing uses the bottom plate 612 of the bottom housing as an example for description. In some solutions, that the emitting module 1 is disposed close to the bottom housing 61 includes: The emitting module 1 is disposed close to the side wall 611 of the bottom housing 61.

Because the emitting module 1 generates heat when working, disposing the emitting module 1 close to the bottom housing 61 can improve heat dissipation efficiency of the emitting module, help ensure stability of detection performance of the detection apparatus, and prolong a service life of the detection apparatus. In addition, because a structure of the bottom housing 61 is stable, a design in which the emitting module 1 is close to the bottom housing can improve disposing stability of the emitting module 1, thereby improving overall stability of an optical path. In conclusion, the detection apparatus provided in this embodiment of this application has higher heat dissipation efficiency and higher stability. This significantly improves reliability of the detection apparatus.

Optionally, with reference to FIG. 17, the emitting module 1 may be connected to the bottom housing 61 through a mechanical part 7, to implement stable mounting of the emitting module and the receiving module. For example, the emitting module 1 may be connected to the mechanical part 7 through a connection structure, and the mechanical part 7 is fixedly assembled with the bottom housing 61, so that the emitting module 1 is fastened to the bottom housing 61. For example, the connection structure may include a connection hole, a pin, a fastener, a buckle structure, and the like.

In some possible implementations, the emitting module 1 is thermally connected to the bottom housing 61, to further improve heat dissipation efficiency. For example, the mechanical part 7 is made of a thermally conductive material, for example, metal (including pure metal and non-metal).

In some implementations, the emitting module 1 and the receiving module 2 have no parallax in a horizontal direction. The horizontal direction herein may be a ground direction, or a direction perpendicular to the thickness direction of the bottom plate 612 (an X direction shown in FIG. 15). In this way, field of view alignment effect of the detection apparatus can be improved, and detection performance can be improved.

In the off-axis architecture, it is usually difficult to completely align fields of view of the emitting module 1 and the receiving module 2. In a possible implementation, when the emitting module 1 and the receiving module 2 are arranged vertically, the emitting module 1 and the receiving module 2 can implement no parallax in fields of view in the horizontal direction, that is, horizontal field of view (horizontal field of view, HFOV) alignment, but fields of view of the emitting module 1 and the receiving module 2 in a vertical direction may be misplaced or have different sizes. In still another possible implementation, when the emitting module 1 and the receiving module 2 are arranged horizontally, the emitting module 1 and the receiving module 2 can implement no parallax in fields of view in the vertical direction, that is, vertical field of view (vertical field of view, VFOV) alignment, but fields of view of the emitting module 1 and the receiving module 2 in the horizontal direction may be misplaced or have different sizes.

As mentioned above, the emitting module 1 and the receiving module 2 may have different sizes of fields of view. The following lists two designs of fields of view of the emitting module 1 and the receiving module 2.

Design 1: A field of view of the emitting module 1 may be greater than a field of view of the receiving module 2. In this way, the field of view of the emitting module 1 may largely cover the field of view of the receiving module 2, thereby reducing a signal loss risk of the receiving module 2, and improving utilization efficiency of the receiving module 2.

Design 2: A field of view of the receiving module 2 is greater than a field of view of the emitting module 1. In this way, the field of view of the receiving module 2 may cover all or most of the field of view of the emitting module 1, so that an echo in the field of view of the emitting module 1 can be effectively received, and a possibility that a signal in a region beyond the field of view of the receiving module 2 causes severe crosstalk to a detection result is reduced, thereby improving utilization efficiency of the emitting module 1.

The following describes related designs of fields of view of the emitting module and the receiving module in this application.

In some possible implementations, there is an included angle between a center line of the field of view of the emitting module 1 and the bottom plate 612, for example, represented as *α*₁. FIG. 19 is a diagram of an optical path according to this application. A diagram of an X-Y plane is used as an example. The emitting module may be rotated by a specific angle, for example, may be rotated by an angle *α*₂, in a direction close to the bottom plate around an Z-axis, so that there is an included angle *α*₁ between the center line of the field of view and the bottom plate. *α*₁ is less than a vertical field of view of the emitting module 1, and the vertical field of view herein is an included angle formed by two edges of a field of view on the X-Y plane. Further, *α*₁ is less than half of the vertical field of view of the emitting module 1. For example, *α*₁≤10°, or *α*₁≤5°. For example, *α*₁ is 2.5°. The emitting module is tilted downward (that is, "nodding"), so that a field of view of the detection apparatus can be deflected downward, to meet a design of a detection region of the detection apparatus. FIG. 20 is a diagram of an application scenario of a detection apparatus according to an embodiment of this application. Because the detection apparatus is usually mounted at a specific height from the ground, if a center line of a field of view is parallel to the ground, most of a field of view of the detection apparatus is the sky or a far position, that is, a field of view without "nodding" shown in FIG. 20. However, a nodding design is used on the emitting module 1, and a field of view of the emitting module of the detection apparatus may be deflected toward the ground, so that the field of view of the detection apparatus can cover the ground closer to the detection apparatus in the horizontal direction. Especially when the detection apparatus is disposed on a vehicle, a detection result of a position close to the vehicle has high value in intelligent driving decision-making. Therefore, the nodding design of the detection apparatus improves availability of the detection result of the detection apparatus. In addition, the emitting module 1 is deflected by a specific angle, to implement the foregoing field of view deflection effect when the bottom housing of the detection apparatus or the like is parallel to the ground. This helps design a mounting position and mounting stability of the detection apparatus.

Further, there is also an included angle between a center line of the field of view of the receiving module 2 of the detection apparatus 10 and the bottom plate 612, for example, represented as *α*₁. Optionally, *α*₁≤10°, or *α*₁≤5°. For example, *α*₁ is 2.5°. In a possible implementation, the receiving module 2 is rotated by a first angle, for example, is rotated by an angle *α*₂, in a direction close to the bottom plate around the Z-axis, so that there is an included angle *α*₁ between the center line of the field of view and the bottom plate. In this way, a coincidence degree between an emitting field of view and a receiving field of view can be improved, availability of the detection result of the detection apparatus can be improved, and detection performance can be improved.

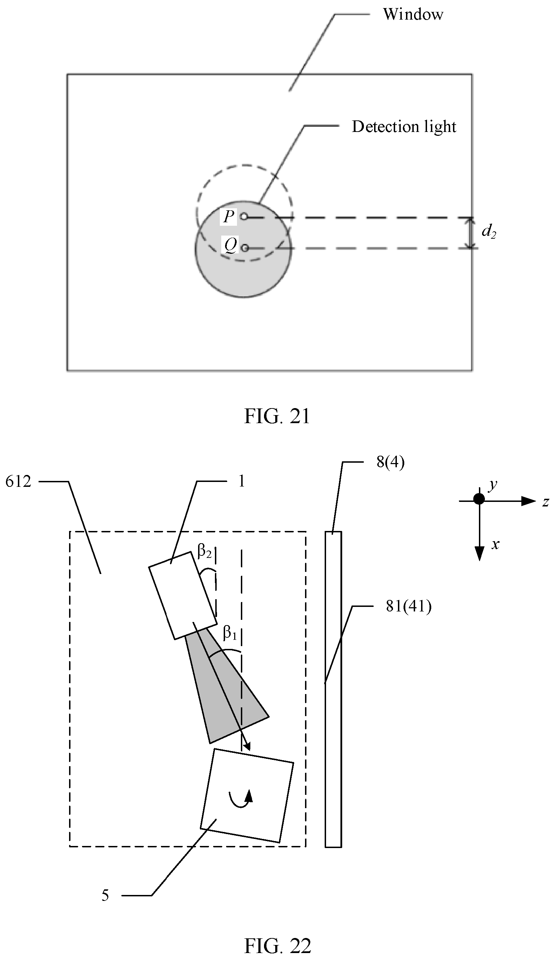

In some possible implementations, in the thickness direction of the bottom plate 612, a center of the field of view of the emitting module does not overlap a center of an ideal emitting light spot of a window. The ideal emitting light spot is a light spot on the window when the center line of the emitting module is parallel to the bottom plate. FIG. 21 is a diagram of a position of a light spot on a window according to an embodiment of this application. With reference to the accompanying drawing shown in FIG. 15, the center of the field of view of the emitting module may be represented by a center (a point Q) of the light spot. Because there is an included angle between the center of the field of view of the emitting module 1 and the bottom plate 612, the detection light is deflected. Therefore, a center of a light spot of the detection light no longer passes through a center (a point P) of the ideal emitting light spot. For example, a distance between the center of the light spot of the detection light and the center of the ideal emitting light spot is *d*₂, where *d*₂>0. The ideal emitting light spot is represented by a dashed circle, and the light spot actually generated by the emitting module is represented by a solid circle.

In some possible implementations, in the thickness direction of the bottom plate 612, a center of the field of view of the emitting module does not overlap a center of a window. For example, because there is an included angle between the detection light and the bottom plate 612, the detection light is deflected relative to the X-Y plane, and the detection light deviates from the center of the window in the thickness direction of the bottom plate 612.

In some possible implementations, there is an included angle between a center line of a field of view of the detection light emitted by the emitting module 1 and a light-passing surface of the window, for example, represented as *β*₁. The window may be considered as the foregoing optical element 4, and both the detection light and the return light pass through the window. FIG. 22 is a diagram of another optical path according to an embodiment of this application. A diagram of an X-Y plane is used as an example. The emitting module may be rotated around a Y axis by a second angle, for example, may be rotated by an angle *β*₂, so that there is an included angle *β*₁ between a center line of a field of view and a light-passing surface 81 of a window 8 (considered as the optical element 4). Optionally, the rotation direction may be a direction close to the window 8. Alternatively, optionally, the rotation direction may be a direction away from the window 8.

Through deflection around the Y-axis, a length of an optical path from the emitting module 1 to another component in the detection apparatus may be adjusted, and a projection of a light beam of the detection light on the component may be controlled. In some cases, in this implementation, a size of a light spot of a light beam of the detection light on the scanning module 5 can be reduced, so that a volume of the scanning module 5 can be reduced, thereby facilitating miniaturization and lightweight development of the detection apparatus. In some other cases, through deflection around the Y axis, a beam waist of the detection light can be closer to a position of the window 8. This reduces an area of the light spot of the detection light on the window 8, reduces a light beam loss, and facilitates miniaturization development of a lidar.

The window 8 may be considered as the foregoing optical element 4. In this case, the light-passing surface 81 may be the second surface 41 or the third surface 42.

Further, there may be an included angle between the center line of the field of view of the receiving module 2 of the detection apparatus 10 and the light-passing surface 81 of the window, for example, represented as *β*₁. Alternatively, the receiving module 2 is rotated by a specific angle, for example, is rotated by an angle *β*₂, in a direction close to the window 8 around the Y-axis. In this way, correspondence between an emitting field of view and a receiving field of view can be improved, and detection performance can be improved.

In a possible implementation, the emitting module includes a laser emitting chip, and the laser emitting lens is one VCSEL chip, or is formed by stitching a plurality of VCSEL chips. Stitching the plurality of VCSEL chips can improve emitting power of the detection apparatus, reduce blind spots of the detection apparatus, and improve detection performance. In addition, when an area of a light emitting region is the same, a manner of stitching the plurality of VCSEL chips has less stress than a manner of directly using an entire VCSEL chip of an approximate size, and stitching the plurality of chips can further have higher heat dissipation efficiency, and further help reduce crosstalk of the emitting module.

In a possible implementation, the emitting module further includes an emitting lens, and the emitting lens is a rotationally symmetric lens. FIG. 23 is a diagram of an emitting module according to an embodiment of this application. An emitting module 1 includes a laser emitting chip 11 and an emitting lens 12. The emitting lens 12 is rotationally symmetrical, for example, a circular lens. Further, detection light generated by the laser emitting chip 11 is emitted through the emitting lens 12, and further passes through an optical element (for example, a scanning module or a window) to reach object space for detection.

Optionally, the emitting lens 12 may be one lens, or a lens group including a plurality of lenses. In some solutions, with reference to FIG. 22, the emitting module 1 may further include a first circuit board 14, and the first circuit board 14 is configured to supply power to the laser emitting chip 11, and may be further configured to implement other control logic or computing logic. Further, the emitting module 1 may further include a first lens barrel 13, and the first lens barrel 13 is configured to package the emitting lens. It should be understood that, in some implementations, the emitting module 1 may include more or fewer components than those shown in FIG. 23. For example, the emitting module 1 further includes one or more of a lens holder (configured to mount the emitting lens), a light filter, or the like.

In a possible implementation, with reference to FIG. 24, the receiving module 2 includes an array receiver 21. For example, the array receiver 21 is an SPAD array or an APD array.

In a possible implementation, there is an included angle between the center line of a field of view of the receiving module 2 and the bottom plate. For related descriptions, refer to descriptions of the emitting module.

In a possible implementation, with reference to FIG. 24, the receiving module 2 further includes a receiving lens 22. The receiving lens 22 is a rotationally symmetric lens, for example, a circular lens. Optionally, the receiving lens 22 may include one or more lenses.

Optionally, the receiving module 2 may further include one or more elements such as a second circuit board 24, a second lens barrel 23, a holder (not shown), or a light filter (not shown). In some solutions, the receiving module and the emitting module may share one circuit board. In other words, the second circuit board 24 and the first circuit board 14 may be a same circuit board.

In a possible implementation, with reference to FIG. 15 and FIG. 18, the detection apparatus further includes an isolation buffer member 31. For related descriptions and a disposing position of the isolation buffer member 31, refer to the foregoing descriptions.

In a possible implementation, the detection apparatus further includes a partition plate 32. For related descriptions, refer to the foregoing descriptions.

In a possible implementation, the detection apparatus further includes a scanning module 5. For related descriptions, refer to the foregoing descriptions.

An embodiment of this application further provides a lidar. The lidar includes the foregoing detection apparatus, for example, the detection apparatus in the embodiment shown in FIG. 2, FIG. 10, FIG. 11, FIG. 12, FIG. 15, or FIG. 18, and the detection apparatus described in the possible implementations of the foregoing embodiments.

An embodiment of this application further provides a terminal. The terminal includes the foregoing detection apparatus, for example, the detection apparatus in the embodiment shown in FIG. 2, FIG. 10, FIG. 11, FIG. 12, FIG. 15, or FIG. 18. Alternatively, the terminal includes the foregoing lidar.

Optionally, the terminal may be an intelligent terminal or a transportation tool such as a vehicle, an uncrewed aerial vehicle, or a robot, or the terminal may be an industrial device, an entertainment device, or the like. The industrial device is, for example, an industrial robot or a robotic arm. The entertainment device is, for example, a virtual reality (virtual reality, VR) device, a mixed reality (mixed reality, MR) device, or a 4D cinema cockpit.

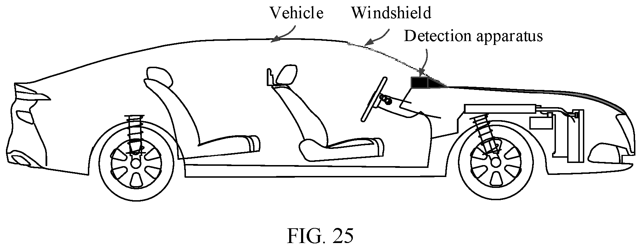

In a possible implementation, FIG. 25 is a diagram of a vehicle according to an embodiment of this application. The vehicle includes a windshield (namely, a windshield glass), and detection light emitted by a detection apparatus may be propagated to the outside of the detection apparatus through the windshield, and return light from the outside of the detection apparatus may be propagated into the detection apparatus through the windshield. The windshield may be considered as the foregoing optical element 4.

Optionally, a light-absorbing layer and/or an anti-diffraction layer may be disposed on the windshield. For related descriptions, refer to the foregoing descriptions.

Optionally, the detection apparatus may be mounted at a plurality of possible positions. For example, the detection apparatus is mounted on a platform of a dashboard of the vehicle (as shown in FIG. 25), or is mounted on the top of a cockpit (as shown in FIG. 20), or may be mounted on a head of the vehicle, a side of the vehicle, a tail of the vehicle, or the like.

It should be understood that the terminal in this application may include an intelligent terminal or a transportation vehicle such as a vehicle, a robot, a drone, a vessel, or a ship. The vehicle is a vehicle in a broad sense, and may be a transportation vehicle (for example, a commercial vehicle, a passenger vehicle, a motorcycle, an airborne vehicle, or a train), an industrial vehicle (for example, a forklift, a trailer, or a tractor), an engineering vehicle (for example, an excavator, a bulldozer, and a crane), and agricultural equipment (for example, a lawn mower and a harvester). For another example, the robot may be a robot such as an automated guided vehicle (automated guided vehicle, AGV), a walkable conversation robot, or a service robot.

In the descriptions of this application, orientations or position relationships indicated by the terms "center", "up", "down", "vertical", "horizontal", "inside", "outside", "left", "side", and the like are orientations or position relationships based on the accompanying drawings, and are merely intended to facilitate description of this application and simplify descriptions, but are not intended to indicate or imply that an apparatus or element needs to have a specific orientation or needs to be constructed and operated in a specific orientation. Therefore, such terms cannot be understood as a limitation on this application. It should be understood that a Z direction, a Y direction, and the like mentioned in some embodiments of this application are referred to by using an X-Y-Z rectangular coordinate system, to facilitate description of features in this solution, and do not indicate or imply that an apparatus or element needs to have a specific orientation or need to be constructed and operated in a specific orientation.

In addition, in embodiments of this application, that the two parts are disposed opposite to each other means that orientations of the two parts are different, and does not necessarily limit the two parts to face two completely opposite directions. For example, that a first surface and a second surface are disposed opposite to each other means that the first surface and the second surface face roughly different directions in a first direction, for example, one of the first surface and the second surface roughly faces a positive direction of an X direction, and the other roughly faces a negative direction of the X direction. In some possible cases, the first surface and the second surface are disposed in parallel and opposite to each other. In some other cases, the first surface and the second surface may not be completely opposite to each other, but there is a specific tilt angle between the first surface and the second surface.

In embodiments of this application, the word "example" or "for example" is used to represent giving an example, an illustration, or a description. Any embodiment or design scheme described with "example" or "for example" in this application should not be explained as being more preferred or having more advantages than another embodiment or design scheme. Exactly, use of the term like "example" or "for example" is intended to present a related concept in a specific manner.

In embodiments of this application, "at least one" means one or more, and "a plurality of" means two or more. "At least one of the following items (pieces)" or a similar expression thereof means any combination of these items, including a singular item (piece) or any combination of plural items (pieces). For example, at least one item (piece) of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between associated objects.

## Claims

1. A detection apparatus, comprising an emitting module, a receiving module, and an isolation buffer member, wherein the emitting module and the receiving module are off-axis architectures;
the emitting module is configured to emit detection light, wherein the detection light is propagated to the outside of the detection apparatus through an optical element;
the receiving module is configured to receive return light of the detection light from the outside of the detection apparatus, wherein the return light passes through the optical element;
the isolation buffer member is disposed inside the detection apparatus, and a gap between the isolation buffer member and the optical element is less than a first distance; and
the isolation buffer member is made of a flexible material, and the isolation buffer member is disposed between a main optical path of the detection light and a main optical path of the return light.

2. The detection apparatus according to claim 1, wherein that the gap between the isolation buffer member and the optical element is less than the first distance comprises:
the isolation buffer member is in contact with and connected to the optical element, or the gap between the isolation buffer member and the optical element is less than a thickness of the isolation buffer member in a first direction, wherein
the first direction is a direction from a main optical axis of the detection light to a main optical axis of the return light.

3. The detection apparatus according to claim 1 or 2, wherein the detection apparatus further comprises a partition plate, the partition plate is disposed between the main optical path of the detection light and the main optical path of the return light and is disposed on a side that is of the isolation buffer member and that is away from the optical element, and a hardness of the isolation buffer member is less than a hardness of the partition plate.

4. The detection apparatus according to claim 3, wherein in a thickness direction of the partition plate, the thickness of the isolation buffer member is greater than or equal to a thickness of the partition plate.

5. The detection apparatus according to claim 3 or 4, wherein the partition plate and the isolation buffer member are configured to isolate an optical path of the emitting module from an optical path of the receiving module.

6. The detection apparatus according to any one of claims 3 to 5, wherein the detection apparatus further comprises a scanning module, the scanning module rotates along a movable shaft, the scanning module comprises a first scanning region 51 located on one side of the partition plate and a second scanning region 52 located on the other side of the partition plate, the first scanning region and the emitting module are located on a same side of the partition plate, and the second scanning region and the receiving module are located on a same side of the partition plate; and
the first scanning region 51 is configured to reflect the detection light from the emitting module to the optical element, and the second scanning region 52 is configured to reflect the return light from the optical element to the receiving module.

7. The detection apparatus according to claim 6, wherein an opening is disposed on the partition plate, the opening penetrates the partition plate in the thickness direction of the partition plate, and the scanning module passes through the opening.

8. The detection apparatus according to claim 7, wherein the scanning module further comprises an isolation part, and the isolation part protrudes from a plurality of reflective surfaces that are of the scanning module and that are disposed around the rotation shaft, and encircles the rotation shaft; and
the isolation part is located in the opening of the partition plate, and an outer peripheral edge that is of the isolation part and that faces away from the reflective surfaces is spaced from and opposite to an inner wall surface of the opening.

9. The detection apparatus according to claim 8, wherein in a direction perpendicular to the thickness direction of the partition plate, a spacing between the isolation part and the inner wall surface of the opening is the first distance;
the thickness of the partition plate is a second distance; and
the first distance is less than the second distance.

10. The detection apparatus according to claim 8 or 9, wherein a ratio of the second distance to the first distance is greater than or equal to 2.

11. The detection apparatus according to any one of claims 1 to 10, wherein the flexible material comprises one or more of foam, a Mylar film, or silicon gel.

12. The detection apparatus according to claim 11, wherein a cross section of the isolation buffer member is rectangular, or the isolation buffer member is a component formed by splicing a plurality of structures.

13. The detection apparatus according to claim 11, wherein when the flexible material comprises the foam, a diameter of a foam hole of the foam is greater than or equal to 0.1 millimeters.

14. The detection apparatus according to any one of claims 1 to 13, wherein the isolation buffer member comprises a first surface facing the optical element, and the optical element comprises a second surface facing the isolation buffer member;
a length of the first surface in the first direction is a third distance, and the first direction is the direction from the main optical axis of the detection light to the main optical axis of the return light;
a thickness of the optical element in a second direction is a fourth distance, and the second direction is a direction perpendicular to the second surface; and
the third distance is greater than the fourth distance.

15. The detection apparatus according to claim 14, wherein a ratio of the third distance to the fourth distance falls within [1.4, 2].

16. The detection apparatus according to any one of claims 1 to 15, wherein the detection apparatus comprises the optical element, and the optical element is a window of the detection apparatus.

17. The detection apparatus according to claim 16, wherein the isolation buffer member comprises the first surface facing the optical element, and the optical element comprises the second surface facing the isolation buffer member; and
the second surface comprises a contact region, the contact region is opposite to the first surface, and an anti-diffraction layer is disposed outside an edge of the first region.

18. The detection apparatus according to any one of claims 1 to 15, wherein the detection apparatus is disposed in a terminal, and the optical element is a windshield of the terminal.

19. A detection apparatus, wherein the detection apparatus comprises an emitting module, a receiving module, and a bottom housing;
the emitting module is configured to emit detection light;
the receiving module is configured to receive return light of the detection light;
the bottom housing comprises a bottom plate and a side wall disposed around the bottom plate, and the emitting module and the receiving module are disposed in space enclosed by the bottom plate and the side wall; and
the emitting module and the receiving module are fastened to the bottom housing, and the emitting module is disposed between the bottom plate and the receiving module.

20. The detection apparatus according to claim 19, wherein there is an included angle between a center line of a field of view of the emitting module and the bottom plate.

21. The detection apparatus according to claim 20, wherein in a thickness direction of the bottom plate, a center of the field of view of the emitting module does not overlap a center of a window.

22. The detection apparatus according to claim 19, wherein the emitting module comprises a laser emitting chip, and the laser emitting lens is one VCSEL chip, or is formed by stitching a plurality of VCSEL chips.

23. The detection apparatus according to claim 22, wherein the emitting module further comprises an emitting lens, and the emitting lens is a rotationally symmetric lens.

24. The detection apparatus according to any one of claims 19 to 23, wherein the receiving module comprises an array receiver.

25. The detection apparatus according to claim 24, wherein there is an included angle between a center line of a field of view of the receiving module and the bottom plate.

26. The detection apparatus according to claim 19, wherein the receiving module further comprises a receiving lens, and the receiving lens is a rotationally symmetric lens.

27. A lidar, wherein the lidar comprises the detection apparatus according to any one of claims 1 to 18 and/or the detection apparatus according to any one of claims 19 to 26.

28. A terminal, wherein the terminal comprises the detection apparatus according to any one of claims 1 to 18, the terminal comprises the detection apparatus according to any one of claims 19 to 26, or the terminal comprises the lidar according to claim 27.

29. A terminal, wherein the terminal comprises an optical element and the detection apparatus according to any one of claims 1 to 15, wherein
the optical element is a windshield of the terminal;
an isolation buffer member in the detection apparatus comprises a first surface facing the optical element; and
the windshield comprises a second surface facing the isolation buffer member, the second surface comprises a contact region, the contact region is opposite to the first surface, and an anti-diffraction layer is disposed outside an edge of the first region.
